# EUROPÄISCHE PATENTSCHRIFT

(11) **EP 2 281 454 B1**
(45) Veröffentlichungstag und Bekanntmachung des Hinweises auf die Patenterteilung: **06.03.2013**
(21) Anmeldenummer: 10006897.2
(22) Anmeldetag: 03.07.2010
(51) Int. Cl.: A01M 29/24, A01M 29/26

(54) **Verfahren und Vorrichtung zum Fernhalten von erdgebundenen Tieren und/oder Vögeln**
Method and device for keeping earthbound animals and/or birds at a distance
Procédé et dispositif d'éloignement d'animaux et/ou d'oiseaux au sol

(30) Priorität: 01.08.2009 DE 102009035808
(43) Veröffentlichungstag der Anmeldung: 09.02.2011
(73) Patentinhaber: Osypka, Peter, 79618 Rheinfelden-Herten (DE)
(72) Erfinder: Osypka, Peter, 79618 Rheinfelden-Herten (DE)
(74) Vertreter: Maucher, Wolfgang

(56) Entgegenhaltungen:
- FR-A1- 2 862 841
- US-B1- 6 223 464
- US-B1- 6 817 138
- US-B2- 6 948 452

## Beschreibung

Die Erfindung betrifft ein Verfahren zum Fernhalten von erdgebundenen Tieren und/oder Vögeln von wenigstens einem Bereich der Erdoberfläche eines Flugplatzes. Die Erfindung betrifft ferner eine Vorrichtung zum Fernhalten von erdgebundenen Tieren und/oder Vögeln von wenigstens einem Bereich der Erdoberfläche eines Flugplatzes.

Es ist bekannt, dass jedes Jahr große Schäden durch Vogelschlag an Flugzeugen entstehen. Es ist daher wünschenswert, die Möglichkeiten der Kollision von Vögeln und Flugzeugen zu verringern, indem die Vögel von den Flugplätzen ferngehalten werden.

Hierzu werden sogenannte Knall-Anlagen eingesetzt, bei welchen neben den Start- und Landebahnen kleine Kästen stehen, die bei Betätigung durch das Personal des Towers einen Knall auslösen, um Vogelschwärme zu vertreiben. Alternativ werden auch Böller und Knallgaspistolen eingesetzt, um die Vögel zu verjagen.

Es sind ferner Verfahren bekannt, bei denen über einen Lautsprecher ein Band mit Vogelstimmen abgespielt spielt wird, wobei die Vogelstimmen zuvor in Notsituationen aufgenommen wurden und den echten Vögeln Angst machen sollen.

Es ist weiter bekannt, auf Flughäfen sogenannte Vogelvergrämer zu beschäftigen und Falken oder Bussarde zu halten, die andere Vögel verjagen sollen.

Es ist auch bekannt, zwischen den Bahnen der Flughäfen das Gras zwischen 10 und 40 cm hoch stehen zu lassen, damit sich keine Vögel einnisten.

Es hat sich herausgestellt, dass die beschriebenen Verfahren und Vorrichtungen im Betrieb verhältnismäßig aufwendig und wenig zuverlässig sind.

Zum Fernhalten größerer erdgebundener Tiere sind außerdem elektrische Weidezäune bekannt, die allerdings bei Vögeln und Kleintieren ihre Wirkung verfehlen.

So ist aus der US 6 173 942 B1 ein elektrisches Zaunnetz bekannt, welches aus horizontal und vertikal verlaufenden Zweigen besteht, wobei nur einige der horizontalen Zweige aus leitendem Material und die übrigen aus nicht-leitendem Material gefertigt sind. Auch dieses Zaunnetz ist zum Fernhalten von Vögeln nicht geeignet.

Aus der US 6223464 B1 ist eine Vorrichtung zur Abstoßung von Erd-Termiten mit den Merkmalen des Oberbegriffs von Anspruch 1 bekannt. Bei dieser Vorrichtung erzeugt ein in eine vorgegebene Richtung zwischen zwei Elektroden fließender Strom eine elektrische Barriere gegen Termiten und dergleichen Insekten.

Der Erfindung liegt die Aufgabe zugrunde, eine Vorrichtung und ein Verfahren der eingangs genannten Art zu schaffen, welches Gewöhnungseffekte bei den erdgebundenen Tieren und/oder Vögeln vermeidet.

Diese Aufgabe wird erfindungsgemäß bei einem Verfahren nach Anspruch 1 und bei einer Vorrichtung nach Anspruch 6 gelöst.

Zur Lösung ist bei einem Verfahren der eingangs genannten Art vorgesehen, dass der wenigstens eine Bereich an seiner Begrenzung mit einer elektrischen Spannung beaufschlagt wird, durch welche ein elektrischer Stromfluss durch den Bereich bewirkt wird, dass der wenigstens eine Bereich abwechseln mit unterschiedlich gerichteten elektrischen Spannungen beaufschlagt wird, durch die in dem wenigstens einen Bereich ein elektrischer Stromfluss mit in einer zeitlichen Abfolge wechselnder Verlaufsrichtung bewirkt wird, dass an den Begrenzungen des wenigstens einen Bereichs jeweils zwei Paare von beabstandeten, blanken Elektroden abwechseln mit einer Spannung beaufschlagt werden, wobei sich die Richtungen der abwechselnd mit den Paaren jeweils erzeugten elektrischen Feldlinien kreuzen, und dass der wenigstens eine Bereich in unmittelbarer Nachbarschaft zu einer Start- und/oder Landebahn des Flugplatzes angeordnet oder installiert und mit der elektrischen Spannung beaufschlagt wird.

Von Vorteil ist dabei, dass mit dem Stromfluss in dem betreffenden Bereich ein Spannungsgefälle entlang der Fließrichtung zumindest an der Oberfläche ausgebildet ist, welches auch dann im Wesentlichen erhalten bleibt, wenn ein Vogel oder erdgebundenes Tier einen Abschnitt entlang der Fließrichtung mit seinen Extremitäten kurzschließt. Das Tier wird dann einen ihm unangenehmen elektrischen Impuls als Schrittspannung spüren und den Bereich verlassen. Somit werden sicherheitsrelevante Bereiche des Flugplatzes einfach und wirkungsvoll von Tieren freigehalten, von denen sonst eine Kollisionsgefahr mit startenden oder landenden Flugzeugen ausgeht. Es hat sich herausgestellt, dass Tiere sehr empfindlich gegen elektrische Felder im Bereich der motorischen Wahrnehmung, insbesondere im Bereich der Extremitäten, sind. Es können somit Vögel und erdgebundene Kleintiere wie Kaninchen und dergleichen von sicherheitsrelevanten Flächen und/oder von Flächen mit schützenswertem Erntegut ferngehalten werden.

Um zu vermeiden, dass das Tier sich in einer bevorzugten Position quer zu der Stromrichtung aufstellen und so der Wirkung der elektrischen Impulse entgehen kann, ist erfindungsgemäß vorgesehen, dass der wenigstens eine Bereich abwechselnd oder in einer zeitlichen Abfolge mit unterschiedlich gerichteten elektrischen Spannungen beaufschlagt wird, durch die in dem wenigstens einen Bereich ein elektrischer Stromfluss, vorzugsweise ein einziger beispielsweise impulsförmiger Stromfluss, mit in einer zeitlichen Abfolge wechselnder Verlaufsrichtung bewirkt wird. Hierbei ergibt sich die Verlaufsrichtung beispielsweise als Mittelwert der Richtungen der lokalen Stromdichten in dem Bereich. Es wird somit die Feldrichtung der im Erdboden verlaufenden Feldlinien zeitlich verändert, beispielsweise indem an verschiedenen Positionen angeordnete Elektroden abwechselnd oder zeitlich nacheinander mit Spannungen beaufschlagt werden.

Weil an den Begrenzungen des wenigstens einen Bereichs, insbesondere an gegenüberliegenden Seiten, jeweils zwei Paare von beabstandeten, blanken Elektroden abwechselnd mit einer Spannung beaufschlagt werden, wobei sich die Richtungen der abwechselnd mit den Paaren jeweils erzeugten elektrischen Feldlinien kreuzen, kreuzen sich die Richtungen der jeweils erzeugten, lokalen Stromdichten, also die lokalen Fließrichtungen der Ströme oder Stromimpulse, gleichermaßen.

Eine Ausgestaltung der Erfindung kann vorsehen, dass der wenigstens eine Bereich der Erdoberfläche mit zeitlich aufeinander folgenden Spannungsimpulsen beaufschlagt wird, durch die jeweils elektrische Stromimpulse in dem wenigstens einen Bereich bewirkt werden. Somit ergibt sich eine einfache Möglichkeit, die Erfindung auszuführen, indem elektrische Impulse von kurzer Dauer und mit hohen Spannungen verwendet werden, wie sie beispielsweise bei Weidezäunen eingesetzt werden. Es werden somit elektrische Impulse mit Spannungen von 10000 V und mehr, mit Impulsdauern von weniger als 1 s, beispielsweise 0,1 s oder weniger, und Impulsenergien von 1 J und mehr, beispielsweise 5 J und mehr, erzeugt. Im Gegensatz zu Weidezäunen werden aber bei der Erfindung die elektrischen Felder in der Erdoberfläche erzeugt und bewirken dort einen Stromfluss.

Um sicherzustellen, dass die elektrischen Impulse von den Tieren gespürt werden, kann vorgesehen sein, dass eine elektrische Spannung verwendet wird, die einen Stromfluss in dem wenigstens einen Bereich erzeugt, der in dem wenigstens einen Bereich über eine Distanz von 1 cm oder 5 cm oder 10 cm einen Spannungsabfall aufweist, der für Vögel und/oder erdgebundene Tiere spürbar ist. Die Höhe der verwendeten Spannung wird somit in Abhängigkeit von der Größe des wenigstens einen Bereichs gewählt. Es kann auch vorgesehen sein, dass die Höhe der Spannung variiert wird, um Gewöhnungseffekte zu vermeiden und/oder um das Verfahren an die Gegebenheiten, beispielsweise die Bodenfeuchtigkeit, anzupassen. Insgesamt kann vorgesehen sein, dass die Intensität der Impulse, die wenigstens durch die Parameter Spannungshöhe, Impulsdauer, Pausendauer und/oder Frequenz gegeben ist, variiert und den jeweiligen Gegebenheiten, beispielsweise den Witterungsbedingungen und/oder der Zahl der in der Nähe befindlichen Tiere, angepasst wird.

Besonders günstige Ergebnisse werden erreicht, wenn ein Bereich in unmittelbarer Nachbarschaft zu einer Start- und/oder Landebahn des Flugplatzes oder zu einer landwirtschaftlichen Nutzfläche angeordnet oder installiert und mit der elektrischen Spannung beaufschlagt wird. Die unmittelbare Nachbarschaft der Start- und/oder Landebahn umfasst angrenzende Teile der Erdoberfläche, von denen Vögel und erdgebundene Tiere in kurzer Zeit auf die Start- und/oder Landebahn oder in den Luftbereich über ihr gelangen und Kollisionen mit startenden oder landenden Flugzeugen verursachen können. Die unmittelbare Nachbarschaft zur der landwirtschaftlichen Nutzfläche umfasst insbesondere die Ackergrenze oder den Feldrain, um Tiere vom Betreten des Ackers oder der landwirtschaftlichen Anbaufläche abzuhalten. Die Installation erfolgt durch das Verlegen der Elektroden in oder auf der Erdoberfläche.

Um Energie zu sparen, kann vorgesehen sein, dass mehrere, voneinander getrennte Bereiche der Erdoberfläche, beispielsweise des Flugplatzes oder der Ackers, in einer zeitlichen Abfolge nacheinander mit einer Spannung oder einer zeitlichen Abfolge von Spannungen beaufschlagt werden. Die Fläche des Flugplatzes, insbesondere die ungenutzte Freifläche des Flugplatzes, bzw. der Fläche des Ackers, kann somit in Bereiche aufgeteilt werden, die in einer zeitlichen Abfolge und/oder bei Bedarf dem erfindungsgemäßen Verfahren unterworfen werden.

Der Stromfluss durch den Bereich kann auf einfache Weise hervorgerufen werden, wenn die Elektroden zumindest halb eingegraben werden, insbesondere wenigstens so tief eingegraben werden, dass ihre in Gebrauchsstellung nach oben weisende Außenfläche mit der Erdoberfläche abschließt. Beispielsweise können die Elektroden an ihrer nach dem Eingraben außerhalb des Erdreichs verbleibenden Außenfläche isoliert sein, während die das Erdreich berührende Außenfläche der Elektroden zumindest teilweise blank ist.

Die Aufgabe wird bei einer Vorrichtung der eingangs genannten Art dadurch gelöst, dass an der Begrenzung des wenigstens einen Bereichs wenigstens zwei beabstandete Elektroden vorgesehen sind, die die Erdoberfläche elektrisch kontaktieren, dass die Elektroden an jeweils einen Pol einer elektrischen Spannungsquelle angeschlossen sind, dass die Elektroden paarweise so zueinander angeordnet sind, dass mit der Spannungsquelle zwischen den an unterschiedliche Pole der Spannungsquelle angeschlossenen Elektroden ein Stromfluss zwischen ihnen durch den Bereich der Erdoberfläche bewirkbar ist, und dass an den oder als Begrenzungen des wenigstens einen Bereichs wenigstens zwei Paare von Elektroden vorgesehen sind, wobei Elektroden so angeordnet sind, dass die Verlaufsrichtung des mit einem Paar von Elektroden bewirkten Stromflusses quer zu der Verlaufsrichtung des mit dem anderen Paar von Elektroden bewirkten Stromflusses ausgerichtet ist.

Von Vorteil ist dabei, dass kurz unterhalb oder an der Oberfläche des Erdbodens elektrische Felder aufgebaut werden, die Tieren den Aufenthalt an diesen Stellen unangenehm machen. Die elektrischen Felder bewirken einen Stromfluss im Erdreich kurz unterhalb der Oberfläche, zu dem aufgrund des ohmschen Widerstands im Erdreich ein Spannungsgefälle entlang der Fließrichtung korrespondiert. Wird dieses Spannungsgefälle abschnittsweise durch Tiere überbrückt, indem diese den Erdboden in diesem Bereich mit ihren Extremitäten berühren, so spüren diese Tiere das Spannungsgefälle als sogenannte Schrittspannung in Form eines elektrischen Impulses im Körper. Da Tiere gegen elektrische Felder empfindlich sind, werden sie den Aufenthalt in dem Bereich der Vorrichtung als unangenehm empfinden und diesen Bereich verlassen. Somit wird die Kollisionsgefahr mit Flugzeugen beim Starten und Landen wirksam vermindert.

Besonders günstig ist es dabei, wenn die Elektroden die Erdoberfläche linienförmig kontaktieren. Unter einer linienförmigen Kontaktierung wird hierbei eine Kontaktierung verstanden, die sich bei einer Elektrode ergibt, deren geometrische Form und damit deren Kontaktbereich eine Längserstreckung aufweist, wobei die Abmessung des Kontaktbereichs oder der geometrischen Form der Elektrode quer zu der Längserstreckung wesentlich kleiner, vorzugsweise ein Zehntel oder weniger, der Länge längs der Längserstreckung ist. Es können geradlinig oder geschwungen oder gebogen oder anderweitig gestaltet ausgeführte Elektroden vorgesehen sein. Durch die linienförmige Kontaktierung ergibt sich ein flächiger Stromfluss durch den Bereich, den die Tiere im gesamten Bereich spüren können.

Zur Erzeugung eines flächenhaft ausgedehnten Stromflusses durch den Bereich kann vorgesehen sein, dass die Elektroden paarweise zueinander parallel und/oder paarweise an gegenüberliegenden Seiten des wenigstens einen Bereichs angeordnet sind.

Um die elektrischen Felder unterhalb der Oberfläche des Erdbodens zu erzeugen, kann vorgesehen sein, dass die Elektroden in Gebrauchslage zumindest teilweise in die Erdoberfläche eingegraben sind. Beispielsweise können die Elektroden quer zu ihrer Längsrichtung einen runden oder viereckigen Querschnitt aufweisen. Die Elektroden können beispielsweise im Querschnitt quer zur Verlaufsrichtung, die durch ihre Längsrichtung gegeben ist, zur Hälfte oder vollständig eingegraben sein und/oder mit der Oberfläche abschließen. Das Eingraben bietet den zusätzlichen Vorteil, dass die Elektroden gegen unbeabsichtigtes Verschieben gesichert sind. Alternativ oder zusätzlich können Befestigungsmittel, beispielsweise Erdnägel oder Anker, zur Befestigung der Elektroden an dem Boden und/oder zur Kontaktierung vorgesehen sein.

Besonders wirkungsvoll ist es, wenn die Spannungsquelle Mittel zu Erzeugung von Spannungsimpulsen aufweist. Derartige Mittel können beispielsweise einen Generator für die Spannungsimpulse aufweisen.

Zur Vermeidung von Gewöhnungs- oder Lerneffekten bei den Tieren ist erfindungsgemäß vorgesehen, dass an den oder als Begrenzungen des wenigstens einen Bereichs wenigstens zwei Paare von Elektroden vorgesehen sind, wobei die Elektroden so angeordnet sind, dass die Verlaufsrichtung des mit einem Paar von zueinander beabstandeten Elektroden bewirkten Stromflusses quer, insbesondere rechtwinklig, zu der Verlaufsrichtung des mit dem anderen Paar von zueinander beabstandeten Elektroden bewirkten Stromflusses ausgerichtet ist. Es kann somit vermieden werden, dass die Tiere ein besonderes Verhalten, beispielsweise eine bevorzugte Orientierung, erlernen, die einen Aufenthalt in dem Bereich ermöglicht, ohne die elektrischen Impulse zu spüren. Hierdurch wird die Wirksamkeit der Vorrichtung nochmals gesteigert.

Zur Variation der Feldrichtung und der Richtung des Stromflusses kann ein Multiplexer vorgesehen sein, mit welchem die Elektroden mit der Spannungsquelle verbindbar sind. Der Multiplexer kann somit nacheinander unterschiedliche Elektroden an die Spannungsquelle anschließen, die jeweils unterschiedlich gerichtete Stromflüsse bewirken.

Beispielsweise kann vorgesehen sein, dass der wenigstens eine Bereich die Form eines Vielecks aufweist und dass die Elektroden gegenüberliegende Kanten des Vielecks bilden. Hierbei kann der wenigstens eine Bereich beispielsweise sechseckig, allgemein viereckig oder rechteckig oder auf andere Weise ausgebildet sein, und/oder es kann vorgesehen sein, dass jeweils gegenüberliegende Seiten des wenigstens einen Bereichs zumindest abschnittweise oder vollständig von den Elektroden eines Elektrodenpaars gebildet werden, wobei die Elektrodenpaare nacheinander an die Spannungsquelle angeschlossen werden oder anschließbar sind. Es lassen sich somit mit den Elektrodenpaaren unterschiedliche Feldlinienmuster erzeugen, die in der Summe oder Überlagerung ein Netz von sich kreuzenden Feldlinien bilden.

Wird die ungenutzte Freifläche des Flugplatzes oder der Acker in mehrere Bereiche unterteilt, so kann ein Multiplexer vorgesehen sein, wobei die Bereiche durch den Multiplexer wahlweise mit Spannungen der Spannungsquelle beaufschlagbar sind und/oder beaufschlagt werden. Es können somit die unterschiedlichen Bereiche unabhängig voneinander nacheinander und/oder gleichzeitig mit dem erfindungsgemäßen Verfahren betrieben werden. Der Multiplexer kann auch zur Beschaltung der Elektrodenpaare eines Bereichs ausgebildet sein, oder es kann hierfür ein weiterer Multiplexer vorgesehen sein. Allgemein wird hierbei unter einem Multiplexer ein Selektionsschaltnetz verstanden, bei welchem die mit der Spannungsquelle elektrisch verbundenen Eingänge wahlweise mit Ausgängen elektrisch verbunden werden können, an welche die Elektroden elektrisch angeschlossen sind.

Um Gewöhnungseffekte zu vermeiden und/oder eine Anpassung an Gegebenheiten wie Witterung und/oder Anzahl der in der Nähe weilenden Tier oder weitere Parameter zu ermöglichen, können Mittel zur Variation der Spannungshöhe und/oder der Impulsdauer und/oder der Frequenz der angelegten Spannungen ausgebildet sein. Es können auch Gleichspannungsimpulse verwendet werden.

Die Erfindung wird nun anhand von Ausführungsbeispielen beschrieben, ist jedoch nicht auf die Ausführungsbeispiele beschränkt. Weitere Ausführungsbeispiele ergeben sich durch Kombination von einzelnen oder mehreren Merkmalen der Ansprüche untereinander und/oder mit einzelnen oder mehreren Merkmalen der Ausführungsbeispiele.

Es zeigt in schematisierter Darstellung
- Fig. 1: eine Draufsicht eines Flugplatzes mit einer Start- und Landebahn und mit einer erfindungsgemäßen Vorrichtung,
- Fig. 2: das Spannungsgefälle im Bereich einer erfindungsgemäßen Vorrichtung in einer Ansicht von oben,
- Fig. 3: den Stromfluss im Bereich einer erfindungsgemäßen Vorrichtung in einer Ansicht von oben,
- Fig. 4: den Verlauf der elektrischen Feldlinien und des Stromflusses bei der Erfindung in einer Schnittansicht,
- Fig. 5: die Verwendung mehrere Elektrodenpaare bei der Erfindung und
- Fig. 6: den Einsatz eines Multiplexers bei der Erfindung.

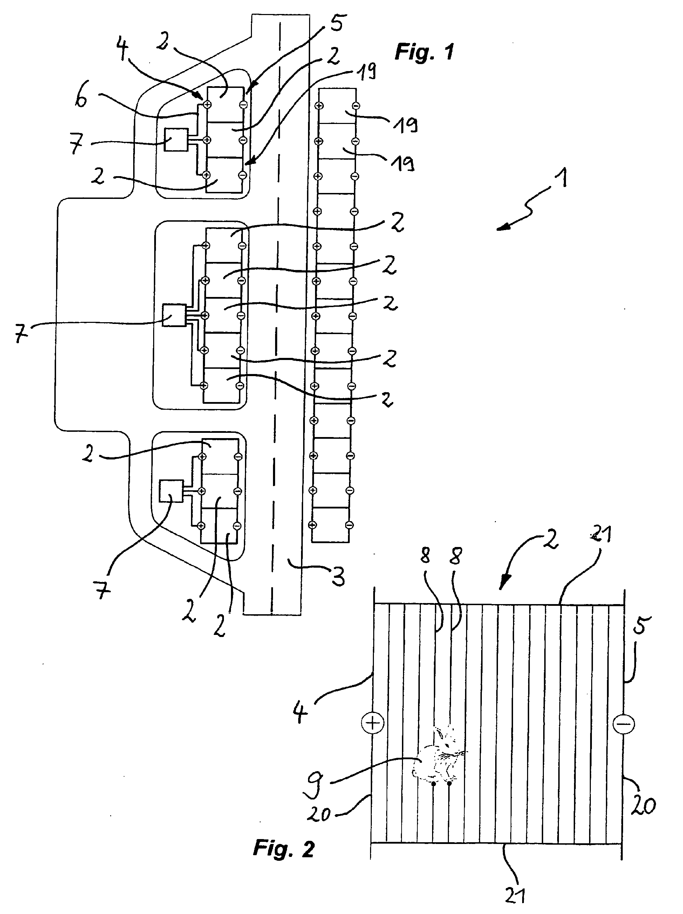

Fig. 1 zeigt in einer schematischen Prinzipdarstellung einen im Ganzen mit 1 bezeichneten Flugplatz, bei welchem Bereiche 2 von erdgebundenen Tieren und/oder Vögeln freigehalten werden sollen, damit diese nicht in den Bereich der, über die oder auf die Start- und/oder Landebahn 3 gelangen.

Die Bereiche 2 weisen an ihren Begrenzungen jeweils mit "+" und "-" bezeichnete, zueinander beabstandete Elektroden 4, 5 auf, die sich geradlinig linienförmig entlang eines Abschnitts der Begrenzung erstrecken und die Erdoberfläche kontaktieren. Der Übersichtlichkeit halber sind in der Fig. 1 nicht alle ersichtlichen Elektroden gesondert mit Bezugszeichen versehen. Gegebenfalls könnten die Elektroden 4 und/oder 5 auch einen von einer geraden Linie abweichenden Verlauf zum Beispiel zur Berücksichtigung der Topographie oder der Platzverhältnisse aufweisen.

Die Elektroden 4, 5 sind über stilisiert dargestellte Anschlussleitungen 6 an die Pole eines Generators 7 angeschlossen, der als elektrische Spannungsquelle dient. Da die Elektroden 4, 5 jeweils paarweise an gegenüberliegenden Seiten der Bereiche 2 angeordnet sind, bewirken sie aufgrund der Leitfähigkeit des Erdbodens einen Stromfluss durch den Bereich 2, sobald sie über die nur einfach gezeichneten Anschlussleitungen 6 mit einer aus dem Generator 7 gespeisten Spannung beaufschlagt werden.

Dieser Stromfluss - vorzugsweise werden Stromimpulse, also zeitlich begrenzte Gleich- oder Wechselströme, generiert - wird von Tieren wahrgenommen, die in dem Bereich 2 an wenigstens zwei voneinander beabstandeten Stellen den Erdboden berühren. Da diese Wahrnehmung eine unangenehme Empfindung auslöst, werden die Tiere veranlasst, die Bereiche 2 zu verlassen und sich somit von dem Flugplatz 1 fernzuhalten.

Fig. 2 zeigt eine Ansicht von oben in schematischer Darstellung auf einen der Bereiche 2 aus Fig. 1.

Dargestellt ist der rechteckförmige Bereich 2, der an zwei gegenüberliegenden Seiten 20 durch die Elektroden 4, 5 begrenzt wird. Die Elektroden 4, 5 kontaktieren den Erdboden des Bereichs 2 linienförmig und bilden somit die Begrenzung des Bereichs 2 an zwei gegenüberliegenden Seiten.

Die zwei übrigen Begrenzungsseiten 21 des Bereichs 2 ergeben sich wie dargestellt durch die gedachten Verbindungslinien der Enden der Elektroden 4, 5.

Fig. 2 zeigt die Spannungsverteilung in dem Bereich 2, die sich aufgrund des Stromflusses zwischen den Elektroden 4, 5 ergibt.

Dargestellt sind Äquipotentialflächen 8, also diejenigen Punkte des Bereichs 2, die gegenüber der Elektrode 4 beziehungsweise gegenüber der Elektrode 5 eine gleiche Spannungsdifferenz aufweisen.

Hierbei stellt die Darstellung in Fig. 2 eine Idealisierung dar, die Abweichungen des streng parallelen Verlaufs der Äquipotentialflächen 8 und des geraden Verlaufs der Begrenzungen des Bereichs 2, die durch unterschiedliche Leitfähigkeiten im Erdboden und/oder durch Randeffekte des Stromflusses an der Begrenzung des Bereichs 2 hervorgerufen werden, nicht berücksichtigen. Fig. 2 soll vielmehr nur das Prinzip der Erfindung verdeutlichen, und es ist für den Fachmann offensichtlich, wie die beschriebenen Effekte die Darstellung verändern würden. Gelangt nun ein Tier 9 in den Bereich 2 und berührt, beispielsweise mit seinen Extremitäten, den Bereich 2 an zwei voneinander beabstandeten Punkten, die zu unterschiedlichen Äquipotentialflächen 8 gehören, so überbrückt das Tier mit seinem Körper die Spannungsdifferenz zwischen diesen Äquipotentialflächen 8, wodurch ein Stromfluss in den Körper des Tieres 9 ausgelöst wird, den dieses Tier 9 verspürt. Hierbei ist ein erdgebundenes Tier 9 gezeigt, es kann sich aber auch um einen Vogel handeln.

Die mit diesem Stromfluss verknüpfte unangenehme Empfindung wird das Tier 9 veranlassen, sich aus diesem Bereich 2 zu entfernen.

Hierbei sorgt der durch die Beaufschlagung der Elektroden 4, 5 mit Spannung aus dem Generator 7 erzeugte Stromfluss in dem Bereich 2 dafür, dass die Spannung zwischen den Äquipotentialflächen 8 bei der Überbrückung durch das Tier 9 nicht sofort zusammenbricht, sondern zu einem spürbaren Effekt in dem Tier 9 führt.

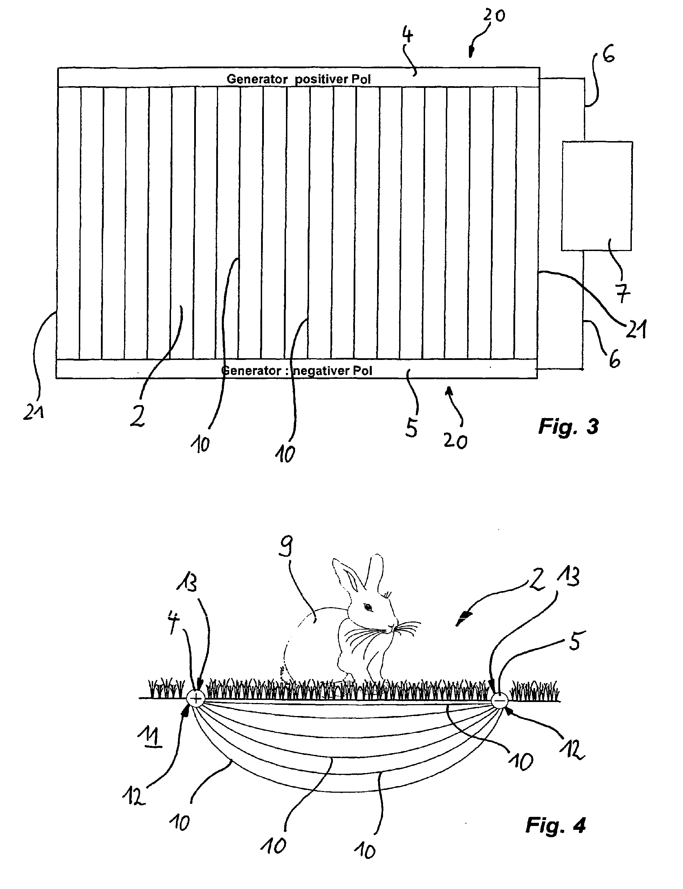

Fig. 3 zeigt den Verlauf des elektrischen Stromflusses in dem Bereich 2 aufgrund der zwischen den Elektroden 4 und 5 angelegten Spannung.

Dargestellt sind in einer schematischen Prinzipdarstellung, die wiederum von Abweichungen von der Idealform absieht, die elektrischen Feldlinien 10, die die lokale Verlaufsrichtung des Stromflusses angeben. Der dargestellte Feldlinienverlauf ergibt sich hierbei in der gezeigten idealisierten Form, da die Elektroden 4, 5 die Erdoberfläche über ihre Längserstreckungsrichtung linienförmig kontaktieren.

Es ist klar, dass aufgrund des Widerstandes für den Stromfluss in der Erdoberfläche aus diesem Stromfluss eine Spannungsverteilung gemäß Fig. 2 entsteht.

Fig. 4 zeigt eine Seitenansicht auf den Bereich 2 aus Fig. 2, bei welcher der Erdboden 11 aufgeschnitten wurde.

Dargestellt ist wiederum in schematischer, von tatsächlich vorliegenden Besonderheiten absehender Weise der Feldlinienverlauf zwischen den mit Spannung beaufschlagten Elektroden 4 und 5, welcher die Verlaufsrichtung des Stromes zwischen den Elektroden 4 und 5 angibt. Diese Verlaufsrichtung ist in jedem Punkt tangential an die beispielhaft eingezeichneten Feldlinien 10 orientiert.

Es ist ersichtlich, dass durch die Elektroden ein Stromfluss durch den Bereich 2 von einer Elektrode 4 zu der anderen Elektrode 5 bewirkt wird, welcher zum Großteil in der Nähe der Oberfläche des Erdbodens 11 verläuft.

In dem Beispiel gemäß Fig. 4 weisen die Elektroden 4, 5 quer zu ihrer linienförmigen Verlegerichtung einen kreisrunden Querschnitt auf und sind jeweils zur Hälfte in die Erdoberfläche des Erdbodens 11 eingegraben.

Um einen Stromfluss durch den Bereich 2 bewirken zu können, sind die Elektroden 4, 5 an den mit dem Erdboden 11 in Berührkontakt stehenden Halbflächen 12 blank ausgeführt.

In einer Weiterbildung sind die aus dem Erdboden 11 hervorstehenden Halbflächen 13 der Elektroden 4, 5 mit einer Isolationsschicht bedeckt. Sie können aber auch blank ausgeführt sein.

Anhand der Spannungsverteilung gemäß der Darstellung in Fig. 2 ist ersichtlich, dass das Tier 9 der unangenehmen Empfindung aus den Stromimpulsen in dem Bereich 2 entgehen kann, indem es sich längs zu den Äquipotentialflächen 8 ausrichtet und nur Punkte berührt, die auf einer einzigen Äquipotentialfläche 8 liegen. Zwar ist dies bei vierbeinigen Tieren 9 schwer durchführbar, jedoch für zweibeinige Tiere, beispielsweise Vögel, leicht erreichbar. Es besteht daher die Möglichkeit, dass sich Vögel antrainieren, sich immer in einer bestimmten Ausrichtung oder Orientierung in dem Bereich 2 niederzulassen, um diese Spannungs- und/oder Stromimpulse nicht zu verspüren.

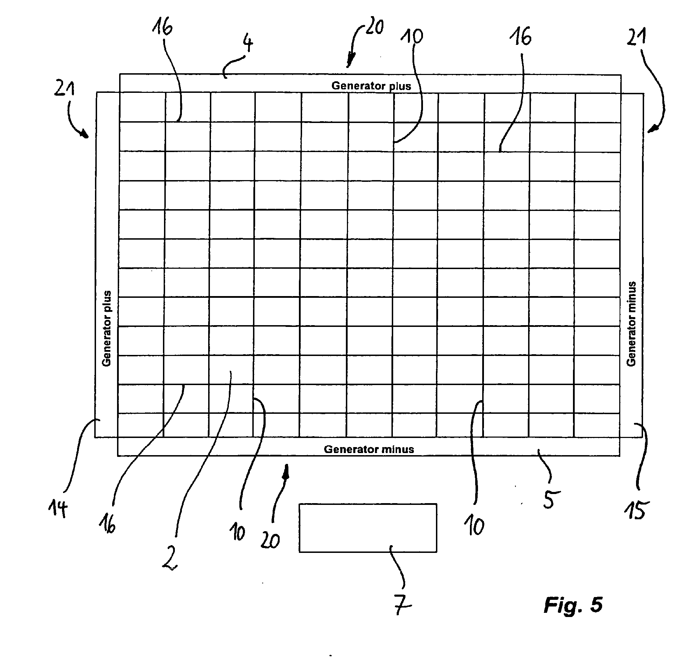

Um dies zu vermeiden, können an dem in Fig. 2 freien Begrenzungen des Bereichs 2 weitere Elektroden 14, 15 angeordnet sein, wie dies Fig. 5 verdeutlicht.

Somit bilden die Elektroden 4, 5, 14, 15 die Begrenzungen des rechteckigen Bereichs 2.

Die Elektroden 4, 5 bilden ein Elektrodenpaar, und die Elektroden 14, 15 bilden ein weiteres Elektrodenpaar. Jedes Elektrodenpaar kann mit dem Generator 7 elektrisch verbunden werden und zwar zeitlich nacheinander oder abwechselnd.

Werden die Elektroden 4 und 5 mit den Spannungspolen des Generators 7 verbunden, so ergibt sich ein Verlauf der elektrischen Feldlinien 10 analog zu Fig. 3. Dieser Feldlinienverlauf bewirkt - wie beschrieben - einen Stromfluss durch den Bereich 2, welcher entlang der Feldlinien 10 in technischer Richtung von der positiven Elektrode 4 zu der negativen Elektrode 5 verläuft.

Werden dagegen die ebenfalls den Erdboden 11 linienförmig kontaktierenden Elektroden 14, 15 mit den Spannungspolen des Generators 7 elektrisch verbunden, so werden in dem Bereich 2 elektrische Feldlinien 16 generiert, deren Verlaufsrichtung im rechten Winkel zu der Verlaufsrichtung der Feldlinien 10 verläuft. Mit anderen Worten kreuzen sich die Verlaufsrichtungen der Feldlinien 10 und der Feldlinien 16.

Diese Feldlinien 16 bewirken einen Stromfluss durch den Bereich 2, der in technischer Richtung von der positiven Elektrode zu der negativen Elektrode 15 gerichtet ist und dessen Verlaufsrichtung sich somit mit der Verlaufsrichtung des durch die Feldlinien 10 bewirkten Stromflusses kreuzt.

Werden daher die Elektroden 4, 5 einerseits und die Elektroden 14, 15 andererseits abwechselnd mit den Spannungspolen des Generators 7 verbunden, so ergibt sich eine zeitliche Abfolge von Stromflüssen in dem Bereich 2, wobei die Verlaufsrichtung des Stromflusses in der zeitlichen Abfolge variiert beziehungsweise wechselt. Der oben angesprochene Vogel müsste daher im Gleichtakt dieses Wechsels seine Orientierung ändern, um den unangenehmen Empfindungen zu entgehen. Da dies schwierig bis unmöglich ist, wird der Vogel es vorziehen, den Bereich 2 zu verlassen.

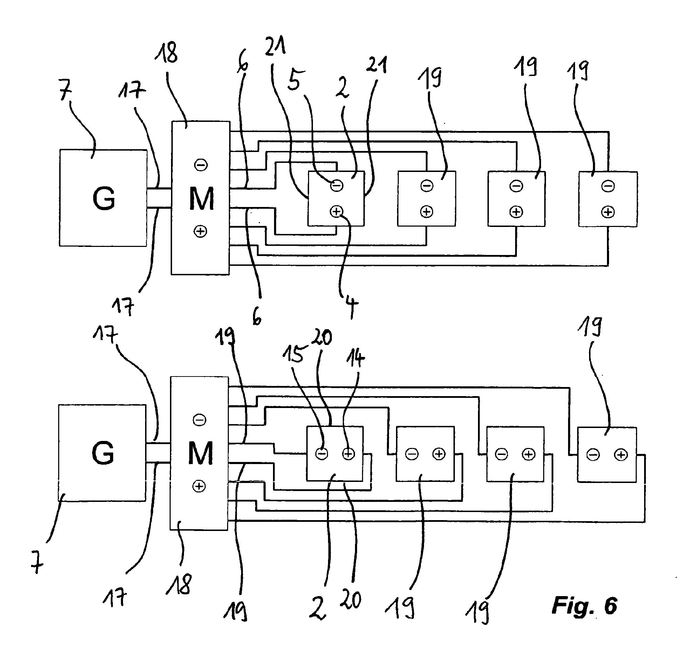

Fig. 6 zeigt in zwei schematischen Schaltbildern, wie die in Fig. 5 gezeigten, paarweise zueinander parallelen und paarweise an gegenüberliegenden Seiten des Bereichs 2 angeordneten Elektroden 4, 5, 14, 15 an die Spannungspole des Generators angeschlossen werden können.

Hierbei zeigt die obere Hälfte von Fig. 6 eine Beschaltungsvariante und die untere Hälfte von Fig. 6 die andere Beschaltungsvariante.

Die Spannungspole 17 des Generators 7 sind hierbei an einen Multiplexer 18 angeschlossen.

An den Ausgang des Multiplexers 18 sind die Anschlussleitungen 6 für die Elektroden 4, 5 und die Anschlussleitungen 19 für die Elektroden 14, 15 des Bereichs 2 angeschlossen.

Der Multiplexer 18 kann nun zwei interne Schaltzustände einnehmen, wobei in dem ersten Schaltzustand die positive Elektrode 4 über die Anschlussleitung 6 mit dem positiven Pol des Generators 7 und die negative Elektrode 5 über deren Anschlussleitung 6 durch den Multiplexer 18 mit dem negativen Spannungspol des Generators 7 elektrisch verbunden ist. In dem anderen Schaltzustand sind dagegen die Anschlussleitungen 19 elektrisch zu den Spannungspolen 17 durchgeführt, so dass die Elektroden 14, 15 mit den Spannungspolen 17 des Generators 7 elektrisch verbunden sind.

Somit kann durch beispielsweise getaktetes oder manuell ausgelöstes Umschalten des Multiplexers zwischen den beschriebenen Schaltzuständen zwischen den zwei Feldverteilungen 10, 16 gemäß Fig. 5 gewechselt werden.

Die weiteren Bereiche 19 in Fig. 6 sind gleichartig zu dem beschriebenen Bereich 2 ausgeführt.

Bei einem Ausführungsbeispiel ist nun vorgesehen, dass die weiteren Bereiche 19 im Gleichtakt zu dem Bereich 2 betrieben werden.

Es kann aber auch vorgesehen sein, dass die Bereiche 19 von dem Multiplexer 18 mit Spannungen beaufschlagt werden, wenn der Bereich 2 nicht betrieben wird, so dass in den Bereichen 2, 19 in zeitlicher Abfolge ein Stromfluss bewirkt wird. Dies kann für viele Anwendungen bereits ausreichend sein, da die erdgebundenen Tiere 9 oder Vögel nicht sofort, nachdem sie durch einen Stromschlag vertrieben wurden, in den Bereich 2 zurückkehren werden, sondern vielmehr der Bereich 2 für einen gewissen Zeitraum frei von Tieren 9 bleiben wird. In diesem Zeitraum können die Tiere 9 von den weiteren Bereichen 19 vertrieben werden.

Der Generator 7 und/oder der Multiplexer 18 weisen nicht weiter dargestellte Mittel zur Erzeugung von Spannungsimpulsen auf, durch welche in den Bereichen 2, 19 Stromimpulse bewirkt werden.

Bei dem Verfahren zum Fernhalten von erdgebundenen Tieren 9 und/oder Vögeln von wenigstens einem Bereich 2, 19 der Erdoberfläche ist vorgesehen, dass an voneinander beabstandeten Abschnitten der Begrenzung 20, 21 des Bereichs 2, 19 jeweils eine Elektrode 4, 5, 14, 15 eines Elektrodenpaars angeordnet und in elektrischem Kontakt mit dem Erdboden 11 gebracht wird und dass die Elektroden 4, 5, 14, 15 mit jeweils einem Spannungspol 17 einer elektrischen Spannungsquelle 7 elektrisch verbunden sind, wobei die elektrische Spannungsquelle 7 einen vorzugsweise impulsförmigen Stromfluss durch den Bereich 2, 19 zwischen den Elektroden 4, 5, 14, 15 bewirkt.

## Patentansprüche

1. Verfahren zum Fernhalten von erdgebundenen Tieren (9) und/oder Vögeln von wenigstens einem Bereich (2, 19) der Erdoberfläche eines Flugplatzes (1), wobei der wenigstens eine Bereich (2, 19) an seiner Begrenzung (20, 21) mit einer elektrischen Spannung beaufschlagt wird, durch welche ein elektrischer Stromfluss durch den Bereich (2, 19) bewirkt wird, wobei der wenigstens eine Bereich (2, 19) abwechselnd mit unterschiedlich gerichteten elektrischen Spannungen beaufschlagt wird, durch die in dem wenigstens einen Bereich (2, 19) ein elektrischer Stromfluss mit in einer zeitlichen Abfolge wechselnder Verlaufsrichtung bewirkt wird, **dadurch gekennzeichnet, dass** an den Begrenzungen (20, 21) des wenigstens einen Bereichs (2, 19) jeweils zwei Paare von beabstandeten, blanken Elektroden (4, 5, 14, 15) abwechselnd mit einer Spannung beaufschlagt werden, wobei sich die Richtungen der abwechselnd mit den Paaren jeweils erzeugten elektrischen Feldlinien (10, 16) kreuzen und dass der wenigstens eine Bereich (2, 19) in unmittelbarer Nachbarschaft zu einer Start- und/oder Landebahn des Flugplatzes (1) angeordnet oder installiert und mit der elektrischen Spannung beaufschlagt wird.

2. Verfahren nach Anspruch 1, **dadurch gekennzeichnet, dass** der wenigstens eine Bereich (2, 19) mit zeitlich aufeinander folgenden Spannungsimpulsen beaufschlagt wird, durch die jeweils elektrische Stromimpulse in dem wenigstens einen Bereich (2, 19) bewirkt werden.

3. Verfahren nach einem der Ansprüche 1 oder 2, **dadurch gekennzeichnet, dass** eine elektrische Spannung verwendet wird, die einen Stromfluss in dem wenigstens einen Bereich (2, 19) erzeugt, der in dem wenigstens einen Bereich (2, 19) über eine Distanz von 1 cm oder 5 cm oder 10 cm oder mehr einen Spannungsabfall aufweist, der für Vögel und/oder erdgebundene Tiere (9) spürbar ist.

4. Verfahren nach einem der Ansprüche 1 bis 3, **dadurch gekennzeichnet, dass** mehrere, voneinander getrennte Bereiche (2, 19) der Erdoberfläche des Flugplatzes (1) in einer zeitlichen Abfolge nacheinander mit einer Spannung oder einer zeitlichen Abfolge von Spannungen beaufschlagt werden.

5. Verfahren nach einem der Ansprüche 1 bis 4, **dadurch gekennzeichnet, dass** die Elektroden (4, 5, 14, 15) zumindest halb eingegraben werden, insbesondere wenigstens so tief eingegraben werden, dass ihre in Gebrauchsstellung nach oben weisende Außenfläche (13) mit der Erdoberfläche abschließt.

6. Vorrichtung zum Fernhalten von erdgebundenen Tieren (9) und/oder Vögeln von wenigstens einem Bereich (2, 19) der Erdoberfläche eines Flugplatzes, wobei an den Begrenzungen des wenigstens einen Bereichs (2, 19) wenigstens zwei Elektroden (4, 5, 14, 15) vorgesehen sind, die die Erdoberfläche elektrisch kontaktieren, wobei die Elektroden (4, 5, 14, 15) an jeweils einen Pol (17) einer elektrischen Spannungsquelle (7) angeschlossen sind, wobei die Elektroden (4, 5, 14, 15) paarweise so zueinander angeordnet sind, dass mit der Spannungsquelle (7) zwischen an unterschiedliche Pole (17) der Spannungsquelle (7) angeschlossenen Elektroden (4, 5, 14, 15) ein Stromfluss zwischen ihnen durch den wenigstens einen Bereich (2, 19) der Erdoberfläche bewirkbar ist, **dadurch gekennzeichnet, dass** an den oder als Begrenzungen (20, 21) des wenigstens einen Bereichs (2, 19) wenigstens zwei Paare von Elektroden (4, 5, 14, 15) vorgesehen sind, wobei Elektroden (4, 5, 14, 15) so angeordnet sind, dass die Verlaufsrichtung des mit einem Paar von Elektroden (4, 5, 14, 15) bewirkten Stromflusses quer zu der Verlaufsrichtung des mit dem anderen Paar von Elektroden (4, 5, 14, 15) bewirkten Stromflusses ausgerichtet ist.

7. Vorrichtung nach Anspruch 6, **dadurch gekennzeichnet, dass** die Elektroden (4, 5, 14, 15) die Erdoberfläche linienförmig kontaktieren.

8. Vorrichtung nach Anspruch 6 oder 7, **dadurch gekennzeichnet, dass** die Elektroden (4, 5, 14, 15) paarweise zueinander parallel und/oder paarweise an gegenüberliegenden Seiten (20, 21) des wenigstens einen Bereichs (2, 19) angeordnet sind.

9. Vorrichtung nach einem der Ansprüche 6 bis 8, **dadurch gekennzeichnet, dass** die Elektroden (4, 5, 14, 15) zumindest teilweise in die Erdoberfläche eingegraben sind.

10. Vorrichtung nach einem der Ansprüche 6 bis 9, **dadurch gekennzeichnet, dass** die Spannungsquelle (7) Mittel zu Erzeugung von Spannungsimpulsen aufweist.

11. Vorrichtung nach einem der Ansprüche 6 bis 10, **dadurch gekennzeichnet, dass** der wenigstens eine Bereich (2, 19) die Form eines Vielecks, insbesondere Rechtecks, aufweist und/oder dass die Elektroden gegenüberliegende Seiten (20, 21) des Vielecks bilden.

12. Vorrichtung nach einem der Ansprüche 6 bis 11, **dadurch gekennzeichnet, dass** ein Multiplexer (18) vorgesehen ist, mit welchem die Elektroden (4, 5, 14, 15) mit der Spannungsquelle (7) verbindbar sind.

13. Vorrichtung nach einem der Ansprüche 6 bis 12, **dadurch gekennzeichnet, dass** ein Multiplexer (18) und mehrere Bereiche (2, 19) der Erdoberfläche vorgesehen sind, wobei die Bereiche (2, 19) durch den Multiplexer (18) wahlweise mit Spannungen der Spannungsquelle (7) beaufschlagbar sind.

14. Vorrichtung nach einem der Ansprüche 6 bis 13, **dadurch gekennzeichnet, dass** Mittel zur Variation der Spannungshöhe und/oder der Impulsdauer und/oder der Frequenz der angelegten Spannungen ausgebildet sind.

## Claims

1. Method for keeping ground-based animals (9) and/or birds away from at least one region (2, 19) of the earth's surface in an airfield (1), with an electrical voltage being applied to the boundary (20, 21) of the at least one region (2, 19), this voltage creating an electric current flow through the region (2, 19), with differently directed electrical voltages alternately being applied to the at least one region (2, 19), these voltages creating an electric current flow in the at least one region (2, 19) in a running direction which alternates in a time sequence, **characterized in that** a voltage is alternately applied to in each case two pairs of spaced-apart, blank electrodes (4, 5, 14, 15) at the boundaries (20, 21) of the at least one region (2, 19), with the directions of the electric field lines (10, 16), which are in each case generated alternately with the pairs, intersecting, and **in that** the at least one region (2, 19) is arranged or installed in the immediate vicinity of a take-off and/or landing strip of the airfield (1) and electrical voltage is applied to the said at least one region.

2. Method according to Claim 1, **characterized in that** temporally successive voltage pulses are applied to the at least one region (2, 19), these voltage pulses in each case creating electric current pulses in the at least one region (2, 19).

3. Method according to either of Claims 1 and 2, **characterized in that** an electrical voltage is used which generates a current flow in the at least one region (2, 19) which exhibits a voltage drop in the at least one region (2, 19) over a distance of 1 cm or 5 cm or 10 cm or more, it being possible to detect said voltage drop for birds and/or ground-based animals (9).

4. Method according to one of Claims 1 to 3, **characterized in that** a voltage or a time sequence of voltages are applied to a plurality of separate regions (2, 19) of the earth's surface in the airfield (1) in one time sequence in succession.

5. Method according to one of Claims 1 to 4, **characterized in that** the electrodes (4, 5, 14, 15) are at least semi-buried, in particular at least buried so deep that their outer surface (13) which points upward in the use position terminates with the earth's surface.

6. Apparatus for keeping ground-based animals (9) and/or birds away from at least one region (2, 19) of the earth's surface in an airfield, with at least two electrodes (4, 5, 14, 15) which make electrical contact with the earth's surface being provided at the boundaries of the at least one region (2, 19), with the electrodes (4, 5, 14, 15) being connected to in each case one pole (17) of an electrical voltage source (7), with the electrodes (4, 5, 14, 15) being arranged in relation to one another in pairs such that, with the voltage source (7) between electrodes (4, 5, 14, 15) which are connected to different poles (17) of the voltage source (7), a current flow can be created through the at least one region (2, 19) of the earth's surface between the said electrodes, **characterized in that** at least two pairs of electrodes (4, 5, 14, 15) are provided at the or as boundaries (20, 21) of the at least one region (2, 19), with electrodes (4, 5, 14, 15) being arranged such that the running direction of the current flow which is created by the pair of electrodes (4, 5, 14, 15) is oriented transverse to the running direction of the current flow which is created by the other pair of electrodes (4, 5, 14, 15).

7. Apparatus according to Claim 6, **characterized in that** the electrodes (4, 5, 14, 15) make contact with the earth's surface in a linear manner.

8. Apparatus according to Claim 6 or 7, **characterized in that** the electrodes (4, 5, 14, 15) are arranged parallel in relation to one another in pairs and/or are arranged in pairs on opposite sides (20, 21) of the at least one region (2, 19).

9. Apparatus according to one of Claims 6 to 8, **characterized in that** the electrodes (4, 5, 14, 15) are at least partially buried in the earth's surface.

10. Apparatus according to one of Claims 6 to 9, **characterized in that** the voltage source (7) has means for generating voltage pulses.

11. Apparatus according to one of Claims 6 to 10, **characterized in that** the at least one region (2, 19) has the shape of a polygon, in particular a rectangle, and/or **in that** the electrodes form opposite sides (20, 21) of the polygon.

12. Apparatus according to one of Claims 6 to 11, **characterized in that** a multiplexer (18) is provided, with which the electrodes (4, 5, 14, 15) can be connected to the voltage source (7).

13. Apparatus according to one of Claims 6 to 12, **characterized in that** a multiplexer (18) and a plurality of regions (2, 19) of the earth's surface are provided, it being possible for voltages from the voltage source (7) to be selectively applied to the regions (2, 19) through the multiplexer (18).

14. Apparatus according to one of Claims 6 to 13, **characterized in that** means for varying the voltage level and/or the pulse duration and/or the frequency of the applied voltages are formed.

## Revendications

1. Procédé conçu pour maintenir des animaux terrestres (9), et/ou des oiseaux, à l'écart d'au moins une zone (2, 19) de la surface du terrain d'un aérodrome (1), ladite zone (2, 19) à présence minimale étant sollicitée, au niveau de sa délimitation (20, 21), par une tension électrique qui génère un courant électrique parcourant ladite zone (2, 19), sachant que ladite zone (2, 19) à présence minimale est sollicitée, en alternance, par des tensions électriques à orientations différentes générant, dans ladite zone (2, 19) à présence minimale, un courant électrique dont la direction de circulation varie selon une séquence temporelle, **caractérisé par le fait que** deux paires respectives d'électrodes nues espacées (4, 5, 14, 15) sont sollicitées en alternance par une tension, au niveau des délimitations 20, 21) de la zone (2, 19) à présence minimale, avec entrecroisement des directions des lignes de champ électrique (10, 16) respectivement générées en alternance par lesdites paires ; et **par le fait que** ladite zone (2, 19) à présence minimale est située ou implantée, et sollicitée par la tension électrique, au voisinage immédiat d'une piste d'envol et/ou d'atterrissage de l'aérodrome (1).

2. Procédé selon la revendication 1, **caractérisé par le fait que** la zone (2, 19) à présence minimale est sollicitée par des impulsions de tension qui se succèdent mutuellement dans le temps, et par lesquelles des impulsions de courant électrique sont respectivement générées dans ladite zone (2, 19) à présence minimale.

3. Procédé selon l'une des revendications 1 ou 2, **caractérisé par** l'utilisation d'une tension électrique générant, dans la zone (2, 19) à présence minimale, un courant qui présente dans ladite zone (2, 19) à présence minimale, sur une distance de 1 cm ou 5 cm, voire 10 cm ou plus, une chute de tension perceptible par des oiseaux et/ou des animaux terrestres (9).

4. Procédé selon l'une des revendications 1 à 3, **caractérisé par le fait que** plusieurs zones (2, 19) de la surface du terrain de l'aérodrome (1), séparées les unes des autres, sont sollicitées les unes après les autres, selon une séquence temporelle, par une tension ou par des tensions se succédant dans le temps.

5. Procédé selon l'une des revendications 1 à 4, **caractérisé par le fait que** les électrodes (4, 5, 14, 15) sont enfouies au moins pour moitié et sont, en particulier,
enfouies d'au moins une profondeur telle que leur face extérieure (13), pointant vers le haut en position d'utilisation, se trouve dans l'affleurement de la surface du terrain.

6. Dispositif destiné à maintenir des animaux terrestres (9), et/ou des oiseaux, à l'écart d'au moins une zone (2, 19) de la surface du terrain d'un aérodrome, au moins deux électrodes (4, 5, 14, 15), prévues au niveau des délimitations de ladite zone (2, 19) à présence minimale, étant électriquement en contact avec la surface du terrain, lesdites électrodes (4, 5, 14, 15) étant raccordées à un pôle respectif (17) d'une source (7) de tension électrique, sachant que lesdites électrodes (4, 5, 14, 15) sont mutuellement agencées par paires, de façon telle qu'un courant parcourant ladite zone (2, 19) à présence minimale sur la surface du terrain puisse être généré, par ladite source de tension (7), entre des électrodes (4, 5, 14, 15) raccordées à différents pôles (17) de ladite source de tension (7), **caractérisé par le fait qu'**au moins deux paires d'électrodes (4, 5, 14, 15) sont prévues au niveau des délimitations (20, 21) de la zone (2, 19) à présence minimale, ou matérialisent lesdites délimitations, des électrodes (4, 5, 14, 15) étant agencées de façon telle que la direction de circulation du courant, généré par une paire d'électrodes (4, 5, 14, 15), soit orientée perpendiculairement à la direction de circulation du courant généré par l'autre paire d'électrodes (4, 5, 14, 15).

7. Dispositif selon la revendication 6, **caractérisé par le fait que** les électrodes (4, 5, 14, 15) sont en contact linéaire avec la surface du terrain.

8. Dispositif selon la revendication 6 ou 7, **caractérisé par le fait que** les électrodes (4, 5, 14, 15) sont agencées en des paires parallèles les unes aux autres, et/ou sont appariées sur des côtés (20, 21) de la zone (2, 19) à présence minimale qui sont tournés à l'opposé.

9. Dispositif selon l'une des revendications 6 à 8, **caractérisé par le fait que** les électrodes (4, 5, 14, 15) sont au moins partiellement enfouies dans la surface du terrain.

10. Dispositif selon l'une des revendications 6 à 9, **caractérisé par le fait que** la source de tension (7) présente des moyens dévolus à la génération d'impulsions de tension.

11. Dispositif selon l'une des revendications 6 à 10, **caractérisé par le fait que** la zone (2, 19) à présence minimale revêt la forme d'un polygone, en particulier d'un rectangle ; et/ou **par le fait que** les électrodes matérialisent des côtés (20, 21) dudit polygone qui sont tournés à l'opposé.

12. Dispositif selon l'une des revendications 6 à 11, **caractérisé par** la présence d'un multiplexeur (18) par lequel les électrodes (4, 5, 14, 15) peuvent être raccordées à la source de tension (7).

13. Dispositif selon l'une des revendications 6 à 12, **caractérisé par** la présence d'un multiplexeur (18) et de plusieurs zones (2, 19) de la surface du terrain, lesdites zones (2, 19) pouvant être sélectivement sollicitées, au moyen dudit multiplexeur (18), par des tensions de la source de tension (7).

14. Dispositif selon l'une des revendications 6 à 13, **caractérisé par le fait que** des moyens sont conçus pour faire varier le niveau de la tension et/ou la durée des impulsions et/ou la fréquence des tensions appliquées.
